Europäisches Patentamt

European Patent Office

Office européen des brevets

(19)

(11) Veröffentlichungsnummer: **0 041 582**
**B1**

(12) **EUROPÄISCHE PATENTSCHRIFT**

(45) Veröffentlichungstag der Patentschrift: **13.06.84**

(21) Anmeldenummer: **80105175.6**

(22) Anmeldetag: **30.08.80**

(51) Int. Cl.³: **H 02 G 3/08, H 02 K 5/22**

(54) Anschlusskasten mit Kabelstutzen für elektrische Maschinen.

(30) Priorität: **10.06.80 DE 3021719**

(43) Veröffentlichungstag der Anmeldung:
**16.12.81 Patentblatt 81/50**

(45) Bekanntmachung des Hinweises auf die Patenterteilung:
**13.06.84 Patentblatt 84/24**

(84) Benannte Vertragsstaaten:
**BE DE FR GB IT SE**

(56) Entgegenhaltungen:
**AU - A - 6 584 469**
**BE - A - 621 632**
**CH - A - 396 135**
**DE - A - 1 640 302**
**DE - A - 2 546 085**
**DE - C - 611 557**
**DE - C - 653 572**
**DE - C - 685 793**
**DE - C - 876 558**
**DE - C - 885 105**
**FR - A - 1 126 866**
**FR - A - 1 290 979**

(73) Patentinhaber: **Schorch GmbH**
**Breitestrasse131**
**D-4050 Mönchengladbach 2 (DE)**

(72) Erfinder: **Papke, Dieter**
**Keplerstrasse 45**
**D-4050 Mönchengladbach 2 (DE)**
Erfinder: **Paulussen, Helmut**
**Kelzenbergerweg 37**
**D-4050 Mönchengladbach 3 (DE)**

(74) Vertreter: **Patentanwaltsbüro Cohausz & Florack**
**Postfach 14 01 47**
**D-4000 Düsseldorf 1 (DE)**

(56) Entgegenhaltungen:
**FR - A - 2 360 968**
**FR - A - 2 457 622**
**GB - A - 125 842**
**US - A - 3 415 942**

Courier Press, Leamington Spa, England.

## Beschreibung

Die Erfindung betrifft einen Anschlußkasten mit einer Abdichtung gegen Eindrigen von Staub und Flüssigkeit zur Aufnahme von Klemmelementen für die Verbindung der Wicklungsenden elektrischer Maschinen mit den Netzanschlußleitungen, bei dem an diametral gegenüberliegenden Seiten einer Kabeldurchführungstülle Dichtungsflachen vorgesehen sind, die bei geschlossenem, Anschlußkasten, die Enden einer zwischen zwei Gehäuseschalen eingelegten Dichtung überlappend und mit dieser in Berührung stehend, in mittengeteilten Öffnungen der Gehäuseschalen eingesetzt sind.

Es ist üblich, an elektrischen Maschinen, z.B. Motoren oder Generatoren, in der Regel am Statorgehäuse, Anschlußkästen anzuordnen. Diese Anschlußkästen enthalten Klemmen oder änliche Anschlußelemente für die Verbindung der Wicklungsenden mit den Netzanschlußleitungen.

Nach den Schutzartvorschriften für elektrische Maschinen (IEC 34—5, DIN 40050) müssen derartige Anschlußkästen weistestgehend gegen Eindringen von Wasser, Staub usw. abgedichtet sein. Es ist bekannt, die Fugen der mehrteilig ausgeführten Anschlußkästen entweder mit elastischen Materialien (Flachgummi, Profilgrummi, einvulkanisiertem Dichtungsmaterial usw.) abzudichten oder aber die die Fugen bildenden Flächen so genau zu bearbeiten, daß hierdurch allein ausreichende Abdichtung beim Schließen des Kastens erzielt werden kann.

Es handelt sich hier um einen Anschlußkasten mit Kabeleinführung durch geteilte Klemmschalen, wobei das Netzanschlußkabel durch mittengeteilte Öffnungen in einer Wand des Anschlußkastens eingeführt wird. Als Abdichtung zwischen Kabel und Klemmschalen werden Bandagen, elastische Ringe, Dichtungskitt oder Pasten verwendet.

An diese Anschlußkästen wird darüber hinaus die Anforderung gestellt, daß sichbesonders bei elektrischen Maschinen mittlerer und höherer Liestung—die Netzanschlußleitungen nach Lösen der Anschlußverbindungen leicht aus dem Anschlußkasten entfernen lassen müssen. Es soll auf jeden Fall verhindert werden, daß Anschlußleitungen größeren Querschnitts aus Öffnungen, Bohrungen usw. zurückgezogen werden müssen.

Die bei Anschlußkästen mit Kabelstutzen bisher üblichen Formen der Abdichtung zwischen Anschlußkasten und Kabel, wie aushärtende Dichtungsmasse, Dichtungskitt, durchmesserausgleichende Bandagen, Dichtungsbänder usw. haben die Nachteile, daß sie bei der Demontage entweder zerstört werden oder aber bei neuerlicher Montage keine Dichtwirkung behalten. Die bakannten Ausgleichsringe, Tüllen usw. haben den nachteil, daß sie genau auf die Einführungsöffnung und den Kabel-Durchmesser abgestimmt sein müssen. Daneben werden vom Anwender äußerste Sorgfalt in der Anwendung und handwerkliche Fertigkeiten sowie Einsicht in die technischen Notwendigkeiten verlangt.

Besondere Schwierigkeiten bereitet die Gehäuseabdichtung z.B. gemäß DE—C—876 558 an den Kreuzungspunkten der Kabeldurchführungstülle mit der Dichtung zwischen den Gehäuseschalen. Hier ist eine Abdichtung nach außen nur gewährleistet, wenn die Tülle mit den Enden der Gehäuseschalendichtung in Preßverbindung steht. Dies ist in der Praxis aber bei den herkömmlichen Kästen nicht erreichbar. Das liegt einmal an Fertigungstoleranzen und -ungenauigkeiten bei der Herstellung der Gehäuseschalen und zum anderen daran, daß sich die Dichtung zwischen den Gehäuseschalen beim Montieren leicht verschieben kann.

Der vorliegenden Erfindung liegt nun die Aufgabe zugrunde, einen Anschlußkasten zu schaffen, bei dem eine Abdichtung gegen das Eindringen von Staub oder Flüssigkeit auch bei mehrfacher Montage oder Demontage gewährleistet ist. Insbesondere soll vermieden werden, daß sich die Dichtung zwischen den Gehäuseschalen beim Montieren leicht verschieben kann und daß bei kleineren Verschiebungen der Dichtung undichte Stellen entstehen.

Zur Lösung dieser Aufgabe werden für einen Anschlußkasten der eingangs genannten Gattung die in Anspruch 1 gekennzeichneten Merkmale vorgeschlagen.

Der erfindungsgemäße Anschlußkasten löst die gestellte Aufgabe und bietet folgende Vorteile:

—die Dichtungselemente sind einfach zu montieren,

—die Dichtungen sind ohne Kleben unverlierbar angebracht,

—die Teilungsfugen der Anschlußkästen können unbearbeitet bleiben,

—der Anschlußkasten ist bei Überflutung auch unter Berücksichtigung der möglichen Fertigungstoleranzen absolut dicht.

Wesentliches Merkmal der Erfindung ist die überlappte Anordnung der Dichtung und der Dichtungsansätze an der Kabeldurchführungstülle in der Nut der Verbindungsfläche einer Gehäuseschale, die sicherstellt, daß auch bei kleineren Verschiebungen der Dichtung keine undichte Stelle entsteht, durch die Staub oder Flüssigkeit in den Anschlußkasten eindringen könnte. Die Verbindungsfläche der anderen Gehäuseschale kann eben sein.

Vorteilhaft ist dabei die radiale Versteifung der Tülle durch einen in einen Umfangsschlitz eingelegten Verstärkungsring aus zäh-elastischem Material. Dieser Ring verhindert ein zu starkes einseitiges Verformen der Tülle, z.B. durch Versatz aufgrund von Ungenauigkeiten oder Fertigungstoleranzen, das an anderer Stelle am Umfang der Tülle Undichtigkeit hervorrufen könnte und verstärkt die für die Abdichtung am Außenumfang notwendige Rückfederung.

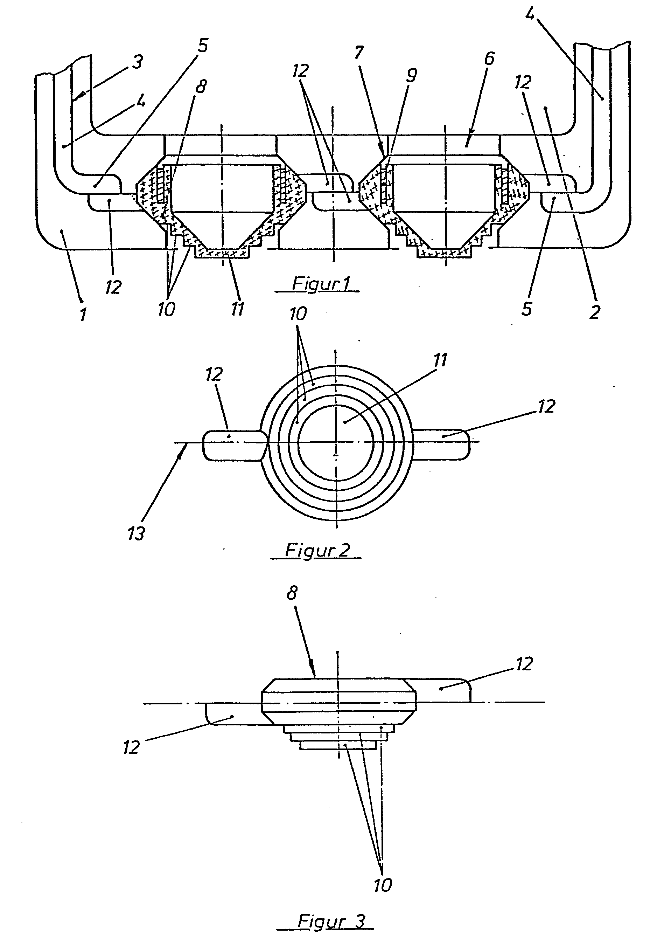

Wenn gemäß einer bevorzugten Ausgestaltung die Dichtungsansätze zur gemeinsamen Achse symmetrisch sind (Fig. 3), erleichtert, dies die Überlappteanordnung. Die Dichtungsansätze sollten, ausgehend von der gemeinsamen Achse, bevorzugt zur einen Seite um die Nuttiefe breiter sein als zur anderen Seite hin (Fig. 2). Dadurch wird die Dichtwirkung verbessert.

Weitere Ausgestaltungen der Erfindung sind in den Ansprüchen 5 und 6 gekennzeichnet.

Ausführungsbeispiele der Erfindung werden anhand der Zeichnung näher erläutert.

Fig. 1 zeigt einen Teilausschnitt des Anschlußkastens im Bereich zweier Kabeldurchführungen,

Fig. 2 ist eine Draufsicht und

Fig. 3 eine Seitenansicht einer Ausführungsform der Kabeldurchführungstülle für den erfindungsgemäßen Anschlußkasten,

Fig. 4 eine zweite und

Fig. 5 eine dritte Ausführungsform einer Kabeldurchführungstülle jeweils in Seitenansicht.

Fig. 1 zeigt die Verbindungsfläche 1 einer Gehäuseschale 2 mit in einer darin eingegossenen Nut 3 eingelegter Dichtung 4. Die Enden 5 der Dichtung 4 enden an der mittengeteilten Öffnung 6 in den Gehäuseschalen 2, in der eine Umfangsnut 7 eingearbeitet ist. In diese Umfangsnut 7 der Öffnung 6 ist eine entsprechend geformte Kabeldurchführungstülle 8 eingesetzt, die durch einen in einen Umfangsschlitz eingesetzten Versteifungsring 9 radial verstärkt ist. Die Tülle 8 kann nach außen konisch sich verjüngend gestuft ausgebildet sein, wobei je nach Durchmesser des durch die Tülle 8 hindurchzuführenden Kabels die Tülle 8 entlang einer der Stufen 10 aufgeschnitten werden kann. Beim Einsatz als Blindtülle bleibt der Boden 11 geschlossen.

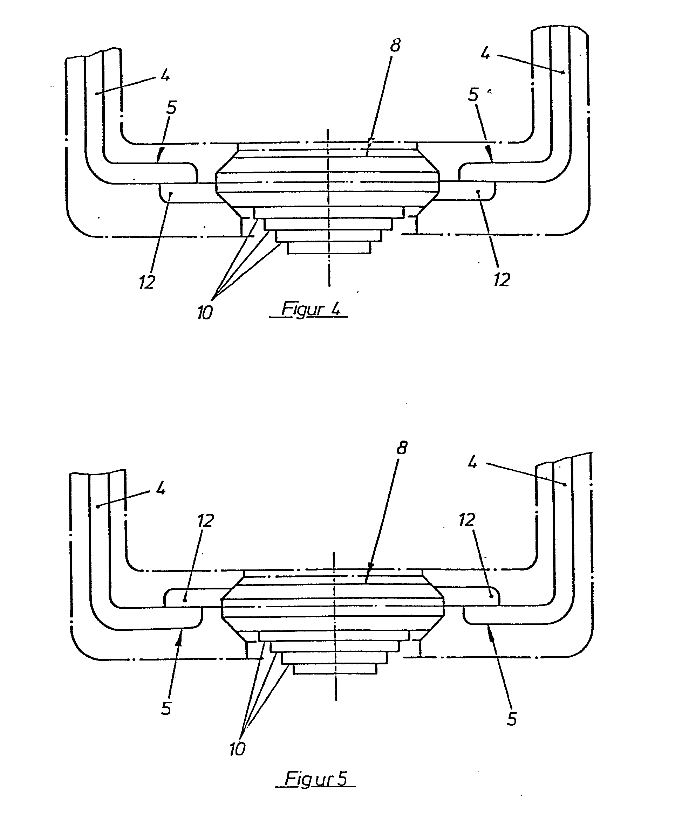

Erfindungsgemäß hat die Tülle 8 an diametral gegenüberliegenden Seiten radial bzw. quasi-radial sich erstreckende Dichtungsansätze 12, die angeklebt oder einstückig mit an die Tülle 8 angeformt sein können. Fig. 3 bis 5 zeigen verschiedene Axiallagen der Dichtungsansätze an der Tülle 8. In allen Fällen liegen die Dichtungsansätze 12 überlappt in Berührung mit den Enden 5 der Dichtung 4, wobei die axial versetzte Anordnung der Dichtungsansätze 12 gemäß Fig. 3 eine gegenseitige Überlappung bei eng benachbarter Anordnung der Öffnungen 6 ermöglicht, wie sie im Mittelteil der Fig. 1 angedeutet ist.

Für den Fall, die Dichtungsansätze 12 in einer Nut 3 in einer der Verbindungsflächen 1 einer der beiden Gehäuseschalen 2 eingelegt und die Verbindungsfläche 1 der anderen Gehäuseschale 2 eben ist, muß die Breite der Dichtungsansätze 12 gemäß Fig. 2, ausgehend von der gemeinsamen Achse 13, zur einen Seite um die Tiefe der Nut 3 breiter sein als zur anderen Seite.

Durch die überlappte Anordnung der miteinander in Berührung stehenden Enden 5 der Dichtung 4 und der Dichtungsansätze 12 an der Tülle 8 wird einmal eine mögliche Undichtigkeit durch Verrutschen der Dichtung 4 verhindert, zum andern jedoch auch der Widerstand der Tülle 8 gegen unbeabsichtigtes Herausrutschen aus der Nut 7 vergrößert, wozu auch der eingelegte Versteifungsring 9 beiträgt.

## Patentansprüche

1. Anschlußkasten mit einer Abdichtung gegen Eindringen von Staub und Flüssigkeit zur Aufnahme von Klemmelementen für die Verbindung der Wicklungsenden elektrischer Maschinen mit den Netzanschlußleitungen, bei dem an diametral gegenüberliegenden Seiten einer Kabeldurchführungstülle (8) Dichtungsflächen vorgesehen sind, die bei geschlossenem Anschlußkasten, die Enden einer zwischen zwei Gehäuseschalen (2) eingelegten Dichtung (4) überlappend und mit dieser in Berührung stehend, in mittengeteilten Öffnungen der Gehäuseschalen eingesetzt sind, dadurch gekennzeichnet, daß die Dichtungsflächen als zwei radial oder annähernd radial nach außen sich erstreckende Dichtungsansätze (12) ausgebildet sind und die Dichtung (4) und die Dichtungsansätze (12) in eine Nut 3 in der Verbindungsfläche einer Gehäuseschale (2) eingelegt sind.

2. Anschlußkasten nach Anspruch 1, dadurch gekennzeichnet, daß in einen Umfangsschlitz der Tülle (8) ein Versteifungsring (9) aus zäh-elastischem Material. vorzugsweise Polyamid oder Polypropylen, eingesetzt ist.

3. Anschlußkasten nach einem der Ansprüche 1 oder 2, dadurch gekennzeichnet, daß die Dichtungsansätze (12) zur gemeinsamen Achse (13) symmetrisch sind.

4. Anschlußkasten nach einem der Ansprüche 1 oder 2, dadurch gekennzeichnet, daß die Dichtungsansätze (12), ausgehend von der gemeinsamen Achse (13), zur einen Seite um die Tiefe der Nut (3) breiter sind.

5. Anschlußkasten nach einem der Ansprüche 1 bis 4, dadurch gekennzeichnet, daß die Höhe des über die Verbindungsfläche (1) überstehenden Teils der Dichtung (4) so bemessen ist, daß bei voll angezogenen Schrauben und direkter Berührung der Verbindungsflächen (1) der Gehäuseschalen (2) die Dichtung (4) begrenzt susammengepreßt ist.

6. Anschlußkasten nach einem der Ansprüche 1 bis 5, dadurch gekennzeichnet, daß die Nut (3) zum Nutgrund konisch sich verjüngende Seitenflächen besitzt, an denen die Dichtung (4) selbsthaftend fixiert ist.

## Revendications

1. Boîte de jonction avec étanchéification contre la pénétration de poussière et de fluide pour recevoir des éléments de bornes pour la liaison des fins d'enroulement de machines électriques avec les lignes de branchement du réseau électrique, dans laquelle sont prévues, sur des faces diamétralement opposées d'une douille de traversée de câbles (8), des surfaces d'étanchéité qui, la boîte de jonction étant fermée, sont logées dans les ouvertures coupées par le milieu des cuvettes de boîtier en recouvrant les extrémités d'un joint d'étanchéité (4) logé entre les cuvettes de boîtier (2) et étant en contact avec elles, caractérisée par le fait que les surfaces d'étanchéité sont formée par deux saillies d'étanchéité (12) radiales ou sensiblement radiales s'étendant vers l'extérieur, et le joint d'étanchéité (4) et les saillies d'étanchéité (12) sont logés dans une rainure (3) dans la surface de liaison d'une cuvette de boîtier (2).

2. Boîte de jonction selon la revendication 1, caractérisée par le fait qu'une bague de renforcement (9) en matériau viscoplastique, de préférence du polyamide ou de polypropylène, est logée dans une fente périphérique de la douille (8).

3. Boîte de jonction selon l'une des revendications 1 et 2, caractérisée par le fait que les saillies d'étanchéité (12) sont symétriques par rapport à l'axe commun (13).

4. Boîte de jonction selon l'une des revendications 1 et 2, caractérisée par le fait que les saillies d'étanchéité (12), partant de l'axe commun (13) sont plus larges d'un côté que la profonduer de la rainure (3).

5. Boîte de jonction selon l'une des revendications 1 à 4, caractérisée par le fait que la hauteur de la partie du joint d'étanchéité (4) dépassant au-dessus de la surface de liaison (1) a une valeur telle que, les vis étant complètement serrées et avec contact direct des surfaces de liaison (1) des cuvettes de boîtier (2), le joint d'étanchéité (4) est comprimé de manière limitée.

6. Boîte de jonction selon l'une des revendications 1 à 5, caractérisée par le fait que la rainure (3) possède des faces latérales se rétrécissant coniquement vers le fond de la rainure auxquelles le joint d'étanchéité (4) est fixé autoadhérent.

## Claims

1. A connexion box, having a seal to prevent the penetration of dust and liquid, for receiving terminals to connect the ends of windings of electrical machines to the supply mains, in which there are provided on diametrically opposite sides of a cable protecting sleeve (8) sealing surfaces which when the connexion box is closed are inserted, overlapping the ends of a seal (4) interposed between two casing shells (2) and touching the said seal (4), in centrally divided openings of the casing shells, characterized in that the sealing surfaces are in the form of two sealing projections (12) extending radially or approximately radially outwards and the seal (4) and the sealing projections (12) are inserted in a groove (3) in the joining surface of a casing shell (2).

2. A connexion box according to Claim 1, characterized in that a reinforcement ring (9) of tough elastic material, preferably polyamide or polypropylene, is inserted in a peripheral slot in the sleeve (8).

3. A connexion box according to one of Claims 1 or 2, characterized in that the sealing projections (12) are symmetrical to the common axis (13).

4. A connexion box according to one of Claims 1 or 2, characterized in that the sealing projections (12), starting from the common axis (13), are wider on one side by the depth of the groove (3).

5. A connexion box according to one of Claims 1 to 4, characterized in that the height of the part of the seal (4) projecting beyond the joining surface (1) is dimensioned such that with fully tightened screws and direct contact of the joining surfaces (1) of the casing shells (2) and seal (4) is compressed to a limited extent.

6. A connexion box according to one of Claims 1 to 5, characterized in that the groove (3) comprises lateral surfaces which diminish in a conical manner with respect to the base of the groove and to which the seal (4) is fixed in a self-adhesive manner.

Figur 1

Figur 2

Figur 3

Figur 4

Figur 5